# EUROPEAN PATENT APPLICATION

(11) **EP 3 401 875 A2**
(43) Date of publication of application: **14.11.2018**
(21) Application number: 18163769.5
(22) Date of filing: 23.03.2018
(51) Int. Cl.: G06T 7/543, G06K 9/00

(54) **METHOD AND SYSTEMS FOR PART GEOMETRY EXTRACTION**

(30) Priority: 12.05.2017 US 201715593565
(71) Applicant: The Boeing Company, Chicago, IL 60606-1596 (US)
(72) Inventor: Wojczyk, William E. Jr., Chicago, 60606-1596 (US); Subramania, Halasya Siva, Chicago, 60606-1596 (US); Kalinowski, Robert Daniel, Chicago, 60606-1596 (US)
(74) Representative: Witte, Weller & Partner Patentanwälte mbB

(57) **Abstract**

A geometry extraction and analysis ("GEA") computer device (210) is provided. The GEA computer device (210) includes at least one processor (305, 405) in communication with at least one memory device (310, 410). The GEA computer device (210) is configured to receive at least one image of at least one view of one or more parts, divide the at least one image into a plurality of segments based on one or more contours contained in the at least one image, identify one or more geometric shapes in the at least one image based on the plurality of segments, identify the one or more parts based on the one or more geometric shapes, and generate a three-dimensional image of the one or more parts based on the one or more geometric shapes.

## Description

### BACKGROUND

The field of the invention relates generally to extracting part geometry, and more specifically, to analyzing engineering drawings to extract part geometries for additive manufacturing.

Engineering drawings for parts, such as aircraft parts, are generally drawn in two-dimensions (2D). In many cases, these engineering drawings are scale representations of individual parts and/or combinations of parts. These engineering drawings are generally not directly translatable into files that are suitable for three-dimensional (3D) printing. The engineering drawings may also be stored in multiple formats, such as, paper, PDF, and/or image files. Converting from engineering files is a time and cost intensive, manual process. Furthermore, in products with a large number of parts, such as an aircraft, the complexity of the product and the large number of parts can increase the time and costs exponentially. Accordingly, a more cost and time effective method of conversion is needed.

### BRIEF DESCRIPTION

In one aspect, a geometry extraction and analysis ("GEA") computer device is provided. The GEA computer device includes at least one processor in communication with at least one memory device. The GEA computer device is configured to receive at least one image of at least one view of one or more parts, divide the at least one image into a plurality of segments based on one or more contours contained in the at least one image, identify one or more geometric shapes in the at least one image based on the plurality of segments, identify the one or more parts based on the one or more geometric shapes, and generate a three-dimensional image of the one or more parts based on the one or more geometric shapes.

In another aspect, a method for extracting part geometry is provided. The method is implemented using a geometry extraction and analysis ("GEA") computer device. The GEA computer device includes a processor in communication with a memory. The method includes receiving, by the processor, at least one image of at least one view of one or more parts, dividing, by the processor, the at least one image into a plurality of segments based on one or more contours contained in the at least one image, identifying, by the processor, one or more geometric shapes in the at least one image based on the plurality of segments, identifying, by the processor, the one or more parts based on the one or more geometric shapes, and generating, by the processor, a three-dimensional image of the one or more parts based on the one or more geometric shapes.

In yet another aspect, at least one non-transitory computer-readable storage media having computer-executable instructions embodied thereon is provided. When executed by at least one processor, the computer-executable instructions cause the processor to receive at least one image of at least one view of one or more parts, divide the at least one image into a plurality of segments based on one or more contours contained in the at least one image, identify one or more geometric shapes in the at least one image based on the plurality of segments, identify the one or more parts based on the one or more geometric shapes, and generate a three-dimensional image of the one or more parts based on the one or more geometric shapes.

### BRIEF DESCRIPTION OF THE DRAWINGS

FIGS. 1-8 show example embodiments of the methods and systems described herein.
FIG. 1 is a schematic diagram illustrating an example system for analyzing engineering drawings to extract part geometries for additive manufacturing.
FIG. 2 is a simplified block diagram of an example geometry extraction system used for analyzing engineering drawings to extract part geometries for additive manufacturing in accordance with FIG. 1.
FIG. 3 illustrates an example configuration of a client system shown in FIG. 2, in accordance with one embodiment of the present disclosure.
FIG. 4 illustrates an example configuration of a server system shown in FIG. 2, in accordance with one embodiment of the present disclosure.
FIG. 5 is a flow chart of a process for analyzing engineering drawings to extract part geometries using the system shown in FIG. 2.
FIG. 6 is a flow chart of a process for cleaning up images using the system shown in FIG. 2.
FIG. 7 is a flow chart of a process for analyzing engineering drawings to extract three-dimensional (3D) part geometries using the system shown in FIG. 2.
FIG. 8 is a diagram of components of one or more example computing devices that may be used in the system shown in FIG. 2.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

The implementations described herein relate to hyperspectral imagery, and, more specifically, to analyzing engineering drawings to extract part geometry. More specifically, a geometry extraction and analysis ("GEA") computer device (also known as a GEA server) cleans up and analyzes engineering drawings to extract three-dimensional (3D) representations of parts. The GEA computer device generates 3D printer build files based on the 3D representations of the parts.

Described herein are computer systems such as the GEA computer devices and related computer systems. As described herein, all such computer systems include a processor and a memory. However, any processor in a computer device referred to herein may also refer to one or more processors wherein the processor may be in one computing device or in a plurality of computing devices acting in parallel. Additionally, any memory in a computer device referred to herein may also refer to one or more memories wherein the memories may be in one computing device or in a plurality of computing devices acting in parallel.

As used herein, a processor may include any programmable system including systems using micro-controllers, reduced instruction set circuits (RISC), application specific integrated circuits (ASICs), logic circuits, and any other circuit or processor capable of executing the functions described herein. The above examples are not intended to limit in any way the definition and/or meaning of the term "processor."

As used herein, the term "database" may refer to either a body of data, a relational database management system (RDBMS), or to both. As used herein, a database may include any collection of data including hierarchical databases, relational databases, flat file databases, object-relational databases, object-oriented databases, and any other structured or unstructured collection of records or data that is stored in a computer system. The above examples are not intended to limit in any way the definition and/or meaning of the term database. Examples of RDBMS's include, but are not limited to, Oracle® Database, MySQL, IBM® DB2, Microsoft® SQL Server, Sybase®, and PostgreSQL. However, any database may be used that enables the systems and methods described herein. (Oracle is a registered trademark of Oracle Corporation, Redwood Shores, California; IBM is a registered trademark of International Business Machines Corporation, Armonk, New York; Microsoft is a registered trademark of Microsoft Corporation, Redmond, Washington; and Sybase is a registered trademark of Sybase, Dublin, California.)

In one embodiment, a computer program is provided, and the program is embodied on a computer readable medium. In an example embodiment, the system is executed on a single computer system, without requiring a connection to a server computer. In a further embodiment, the system is being run in a Windows® environment (Windows is a registered trademark of Microsoft Corporation, Redmond, Washington). In yet another embodiment, the system is run on a mainframe environment and a UNIX® server environment (UNIX is a registered trademark of X/Open Company Limited located in Reading, Berkshire, United Kingdom). The application is flexible and designed to run in various different environments without compromising any major functionality. In some embodiments, the system includes multiple components distributed among a plurality of computing devices. One or more components may be in the form of computer-executable instructions embodied in a computer-readable medium.

As used herein, an element or step recited in the singular and preceded with the word "a" or "an" should be understood as not excluding plural elements or steps, unless such exclusion is explicitly recited. Furthermore, references to "example embodiment" or "one embodiment" of the present disclosure are not intended to be interpreted as excluding the existence of additional embodiments that also incorporate the recited features.

As used herein, the terms "software" and "firmware" are interchangeable, and include any computer program stored in memory for execution by a processor, including RAM memory, ROM memory, EPROM memory, EEPROM memory, and non-volatile RAM (NVRAM) memory. The above memory types are examples only and thus, are not limiting as to the types of memory usable for storage of a computer program.

Furthermore, as used herein, the term "real-time" refers to at least one of the time of occurrence of the associated events, the time of measurement and collection of predetermined data, the time to process the data, and the time of a system response to the events and the environment. In the embodiments described herein, these activities and events occur substantially instantaneously.

The systems and processes are not limited to the specific embodiments described herein. In addition, components of each system and each process can be practiced independent and separate from other components and processes described herein. Each component and process also can be used in combination with other assembly packages and processes.

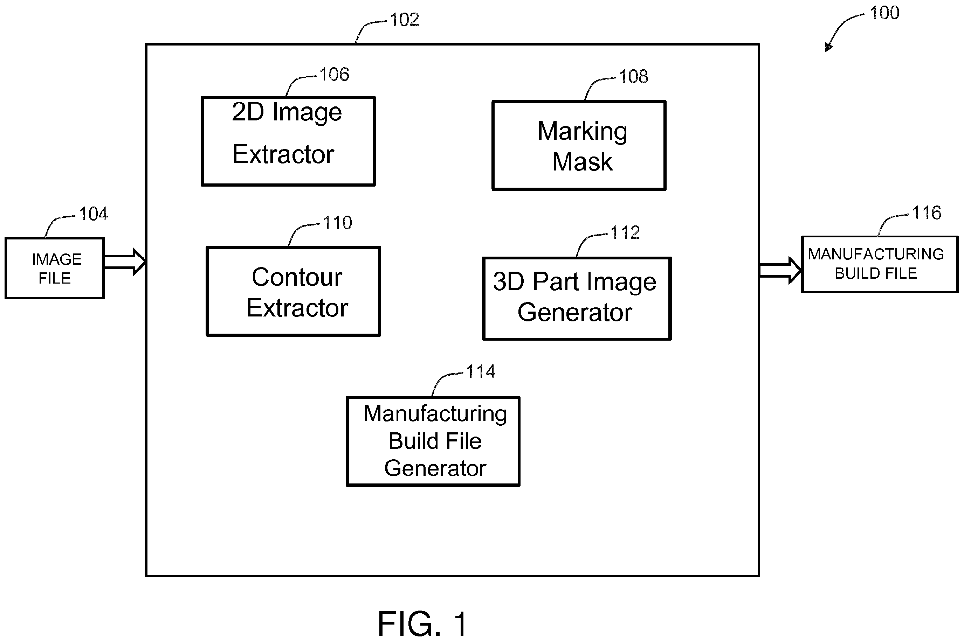

FIG. 1 is a schematic diagram illustrating an example system 100 for analyzing engineering drawings to extract part geometry. System 100 includes a geometry extraction and analysis ("GEA") computer device 102 (also known as a GEA server).

In the example embodiment, GEA computer device 102 receives one or more image files 104. Image files 104 include engineering drawings of parts, such as aircraft parts. Image files 104 can be any of a plurality of formats including, but not limited to, paper, PDF, and image file formats. In some embodiments, image files 104 include images of a plurality of interconnected parts. In some of these embodiments, image files 104 also include a plurality of views of the parts. Some of these views may include a zoom-in view of a section of a larger image in the image file 104. For example, an image file 104 may include a large view of a collection of parts and how they interconnect. The image file 104 may also include several smaller views, where each of the smaller views includes a portion or subset of the parts in the larger view, and where the smaller views are illustrated at a different scale as the larger image. In the example embodiment, each image file 104 includes a plurality of markings and symbols on the engineering drawings. In the example embodiment, each image file 104 includes 2D representations of parts.

GEA computer device 102 includes a two-dimensional (2D) extractor 106 for extracting the 2D images from image files 104. GEA computer device 102 also includes a marking mask 108 for removing markings from the 2D images. GEA computer device 102 further includes a contour extractor 110 for detecting, extracting, and collating the contours of the parts in the 2D images. Moreover, GEA computer device 102 includes a 3D part image generator 112 for generating a 3D image of a part based on the extracted contours. In addition, GEA computer device 102 includes a manufacturing build file generator 114 for generating a manufacturing build file 116 based on the 3D image of the part.

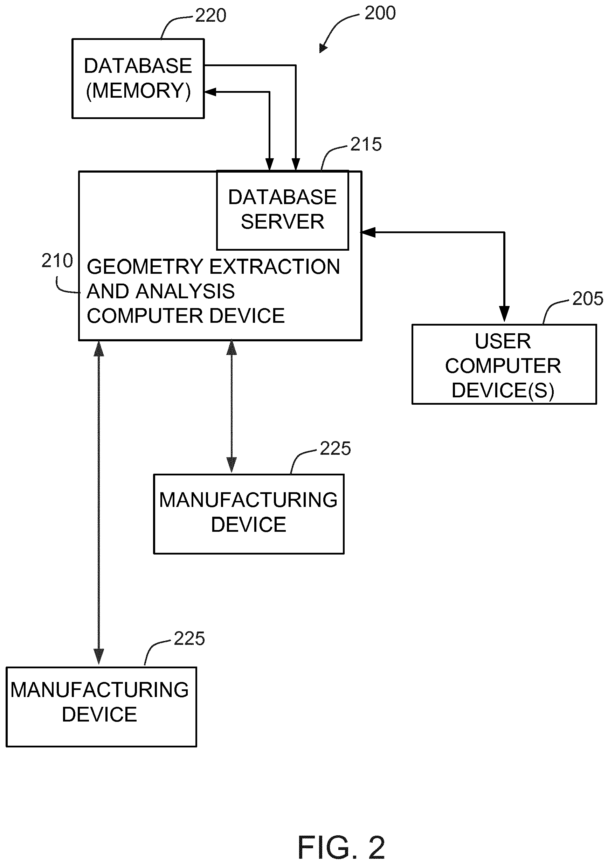

FIG. 2 is a simplified block diagram of an example geometry extraction system 200 used for analyzing engineering drawings to extract part geometry. In the example embodiment, system 200 may be used for extracting and generating 3D images of parts contained in engineering drawings. As described below in more detail, a geometry extraction and analysis ("GEA") computer device 210, which is similar to GEA computer device 102 (shown in FIG. 1), is configured to receive at least one image of at least one view of one or more parts. GEA computer device 210 is also configured to divide the at least one image into a plurality of segments based on one or more contours contained in the at least one image. GEA computer device 210 is further configured to identify one or more geometric shapes in the at least one image based on the plurality of segments. Moreover, GEA computer device 210 is configured to identify the one or more parts based on the one or more geometric shapes. In addition, GEA computer device is configured to generate a 3D image of the one or more parts based on the one or more geometric shapes.

In the example embodiment, user computer devices 205 are computers that include a web browser or a software application to enable user computer devices 205 to access GEA computer device 210 using the Internet or a network. More specifically, user computer devices 205 are communicatively coupled to GEA computer device 210 through many interfaces including, but not limited to, at least one of a network, such as the Internet, a local area network (LAN), a wide area network (WAN), or an integrated services digital network (ISDN), a dial-up-connection, a digital subscriber line (DSL), a cellular phone connection, and a cable modem. User computer devices 205 can be any device capable of accessing the Internet, or another network, including, but not limited to, a desktop computer, a laptop computer, a personal digital assistant (PDA), a cellular phone, a smartphone, a tablet, a phablet, or other web-based connectable equipment. In the example embodiment, a user uses a user computer device 205 to select an image file to be analyzed and to change processing parameters.

GEA computer device 210 includes one or more computer devices configured to perform as described herein. In the example embodiment, GEA computer device 210 includes one or more server systems configured to communicate with user computer device 205 and manufacturing systems 225. In some embodiments, GEA computer device 210 is remote from at least one of user computer device 205, database server 215, and manufacturing systems 225 and communicates with the remote computer device (either user computer device 205, database server 215, and manufacturing systems 225) through the Internet. More specifically, GEA computer device 210 is communicatively coupled to the Internet through many interfaces including, but not limited to, at least one of a network, such as a local area network (LAN), a wide area network (WAN), or an integrated services digital network (ISDN), a dial-up-connection, a digital subscriber line (DSL), a cellular phone connection, and a cable modem. GEA computer device 210 can be any device capable of accessing the Internet, or another network, including, but not limited to, a desktop computer, a laptop computer, a personal digital assistant (PDA), a cellular phone, a smartphone, a tablet, a phablet, or other web-based connectable equipment.

A database server 215 is communicatively coupled to a database 220 that stores data. In one embodiment, database 220 includes processing parameters, a repository of individual marker representations, image files 104 (shown in FIG. 1), extracted 2D images, 3D part images, manufacturing system parameters, and manufacturing build files 116 (shown in FIG. 1). In the example embodiment, database 220 is stored remotely from GEA computer device 210. In some embodiments, database 220 is decentralized. In the example embodiment, a person can access database 220 via user computer devices 205 by logging onto GEA computer device 210, as described herein.

Manufacturing systems 225 include additive manufacturing machines and/or other devices capable of manufacturing 3D objects. Examples of manufacturing systems 225 may include, but are not limited to, direct metal laser melting systems, selective laser sintering systems, binder jet systems, electron beam systems, material extrusion systems, material jetting systems, sheet lamination systems, and vat photopolymerization systems. In the example embodiment, manufacturing systems 225 are in communication with GEA computer device 210. More specifically, manufacturing systems 225 are communicatively coupled to GEA computer device 210 through many interfaces including, but not limited to, at least one of the Internet, a network, such as a local area network (LAN), a wide area network (WAN), or an integrated services digital network (ISDN), a dial-up-connection, a digital subscriber line (DSL), a cellular phone connection, and a cable modem.

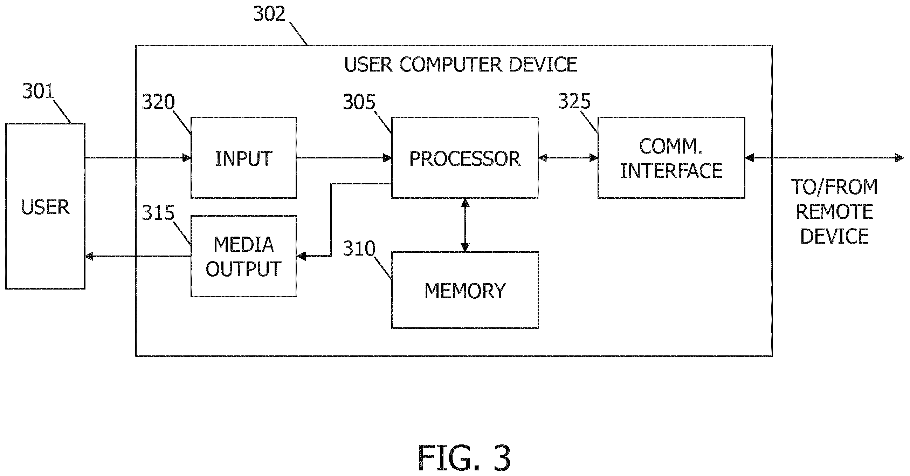

FIG. 3 illustrates an example configuration of a client system shown in FIG. 2, in accordance with one embodiment of the present disclosure. User computer device 302 is operated by a user 301. User computer device 302 may include, but is not limited to, user computer device 205 and manufacturing systems 225 (both shown in FIG. 2). User computer device 302 includes a processor 305 for executing instructions. In some embodiments, executable instructions are stored in a memory area 310. Processor 305 may include one or more processing units (e.g., in a multi-core configuration). Memory area 310 is any device allowing information such as executable instructions and/or transaction data to be stored and retrieved. Memory area 310 may include one or more computer-readable media.

User computer device 302 also includes at least one media output component 315 for presenting information to user 301. Media output component 315 is any component capable of conveying information to user 301. In some embodiments, media output component 315 includes an output adapter (not shown) such as a video adapter and/or an audio adapter. An output adapter is operatively coupled to processor 305 and operatively coupleable to an output device such as a display device (e.g., a cathode ray tube (CRT), liquid crystal display (LCD), light emitting diode (LED) display, or "electronic ink" display) or an audio output device (e.g., a speaker or headphones). In some embodiments, media output component 315 is configured to present a graphical user interface (e.g., a web browser and/or a client application) to user 301. A graphical user interface may include, for example, analysis of one or more engineering drawings. In some embodiments, user computer device 302 includes an input device 320 for receiving input from user 301. User 301 may use input device 320 to, without limitation, select and/or enter one or more processing parameters or manufacturing system parameters. Input device 320 may include, for example, a keyboard, a pointing device, a mouse, a stylus, a touch sensitive panel (e.g., a touch pad or a touch screen), a gyroscope, an accelerometer, a position detector, a biometric input device, and/or an audio input device. A single component such as a touch screen may function as both an output device of media output component 315 and input device 320.

User computer device 302 may also include a communication interface 325, communicatively coupled to a remote device such as GEA computer device 210 (shown in FIG. 2). Communication interface 325 may include, for example, a wired or wireless network adapter and/or a wireless data transceiver for use with a mobile telecommunications network.

Stored in memory area 310 are, for example, computer-readable instructions for providing a user interface to user 301 via media output component 315 and, optionally, receiving and processing input from input device 320. The user interface may include, among other possibilities, a web browser and/or a client application. Web browsers enable users, such as user 301, to display and interact with media and other information typically embedded on a web page or a website from GEA computer device 210. A client application allows user 301 to interact with, for example, GEA computer device 210. For example, instructions may be stored by a cloud service and the output of the execution of the instructions sent to the media output component 315.

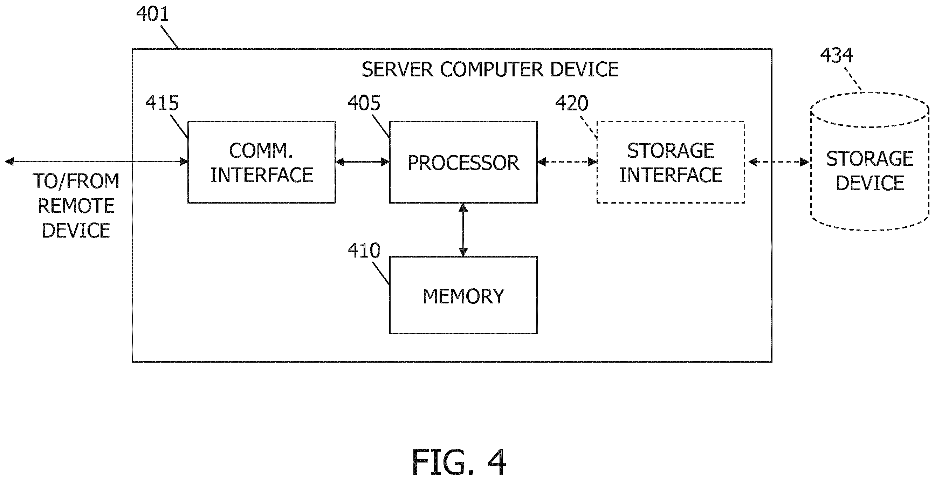

FIG. 4 illustrates an example configuration of a server system shown in FIG. 2, in accordance with one embodiment of the present disclosure. Server computer device 401 may include, but is not limited to, database server 215 and GEA computer device 210 (both shown in FIG. 2). Server computer device 401 also includes a processor 405 for executing instructions. Instructions may be stored in a memory area 410. Processor 405 may include one or more processing units (e.g., in a multi-core configuration).

Processor 405 is operatively coupled to a communication interface 415, such that server computer device 401 is capable of communicating with a remote device such as another server computer device 401, user computer device 205, manufacturing system 225, or GEA computer device 210 (all shown in FIG. 2). For example, communication interface 415 may receive requests from user computer devices 205 via the Internet.

Processor 405 may also be operatively coupled to a storage device 434. Storage device 434 is any computer-operated hardware suitable for storing and/or retrieving data, such as, but not limited to, data associated with database 220 (shown in FIG. 2). In some embodiments, storage device 434 is integrated in server computer device 401. For example, server computer device 401 may include one or more hard disk drives as storage device 434. In other embodiments, storage device 434 is external to server computer device 401 and may be accessed by a plurality of server computer devices 401. For example, storage device 434 may include a storage area network (SAN), a network attached storage (NAS) system, and/or multiple storage units such as hard disks and/or solid state disks in a redundant array of inexpensive disks (RAID) configuration.

In some embodiments, processor 405 is operatively coupled to storage device 434 via a storage interface 420. Storage interface 420 is any component capable of providing processor 405 with access to storage device 434. Storage interface 420 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 405 with access to storage device 434.

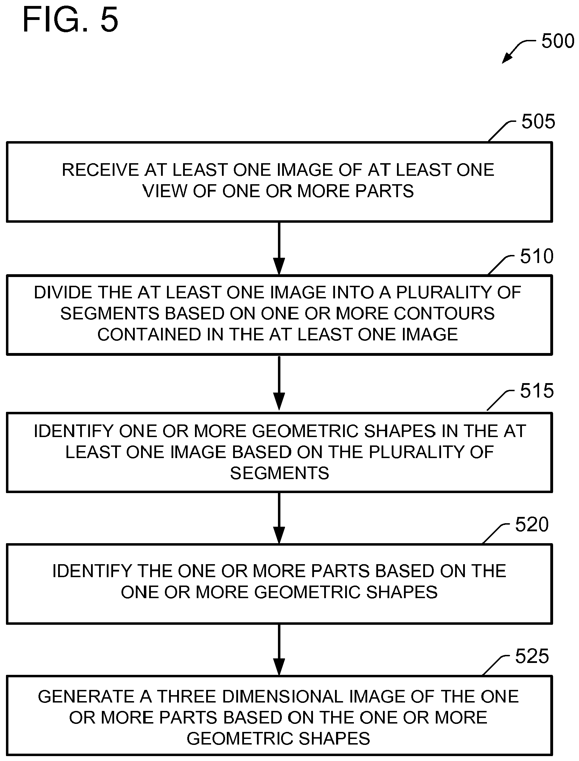

Processor 405 executes computer-executable instructions for implementing aspects of the disclosure. In some embodiments, processor 405 is transformed into a special purpose microprocessor by executing computer-executable instructions or by otherwise being programmed. For example, processor 405 is programmed with the instructions such as are illustrated in FIG. 5.

FIG. 5 is a flow chart of a process 500 for analyzing engineering drawings to extract part geometries using system 200 (shown in FIG. 2). In the example embodiment, process 500 is performed by GEA computer device 210 (shown in FIG. 2).

In the example embodiment, GEA computer device 210 receives 505 at least one image of at least one view of one or more parts. In the example embodiment, GEA computer device 210 receives 505 the at least one image in one or more image files 104 (shown in FIG. 1). In some embodiments, the one or more image files 104 are stored in a memory, such as in database 220 (shown in FIG. 1). In some embodiments, the at least one image is selected by a user, such as through user computer device 205. In other embodiments, GEA computer device 210 is configured to traverse through a plurality of images in a plurality of image files 104 by repeating the steps described herein for each image or set of images. In the exemplary embodiment, the at least one image includes a primary view of an assemblage of plurality of parts. In some embodiments, the at least one image also includes one or more secondary views of one or more of the plurality of parts, such a view of the one or more parts at a different angle or a different scale.

In the example embodiment, GEA computer device 210 divides 510 the at least one image into a plurality of segments based on one or more contours contained in the at least one image. In the example embodiment, GEA computer device 210 uses contour extractor 110 (shown in FIG. 1) to recognize the contours of the parts contained in the at least one image. GEA computer device 210 identifies 515 one or more geometric shapes in the at least one image based on the plurality of segments. GEA computer device 210 identifies 520 the one or more parts in the at least one image based on the one or more geometric shapes. For example, GEA computer device 210 divides 510 an image into a plurality of curves and contours. GEA computer device 210 then identifies 515 one or more geometric shapes from the plurality of curves and contours in the at least one image. Then GEA computer device 210 identifies 520 the parts in the at least one image based on the geometric shapes.

In the example embodiment, GEA computer device 210 generates 525 a three-dimensional (3D) image of the one or more parts based on the one or more geometric shapes. In the example embodiment, GEA computer device 210 generates 525 a 3D image of each part in the at least one image. In some embodiments, GEA computer device 210 generates 525 individual 3D images for each part. In some further embodiments, GEA computer device 210 generates 525 at least one 3D image of interconnected parts.

In some embodiments, GEA computer device 210 counts the pixels in each contour and uses that count to determine the relative size of each part in the image. Furthermore, GEA computer device 210 determines the relative size of the same part in two different views in the at least one image, where the primary view and the secondary view are at different scales. In some further embodiments, GEA computer device 210 determines at least one part dimension of a plurality of part dimensions of one or more of the plurality of parts. GEA computer device 210 calculates a plurality of part dimensions associated with each of the one or more parts based on the determined at least one part dimension and the relative size of the one or more parts. For example, the primary view of at least one image does not contain any size or scale markings. GEA computer device 210 determines one or more dimensions, such as length, width, and/or depth, of a part based on a secondary view. GEA computer device 210 identifies the same part in the primary view and determines the relative size of the part between the two views. GEA computer device 210 then calculates the dimensions of the other parts in the primary view based on the relative size and the known dimensions of the part. In some further embodiments, GEA computer device 210 identifies a known part from another image, where the dimensions of that part are known. GEA computer device 210 uses those known dimensions of the known part to calculate the unknown dimensions of the other parts.

In some embodiments, GEA computer device 210 receives a plurality of manufacturing dimensions of a manufacturing system 225 (shown in FIG. 2) for manufacturing at least one part of the one or more parts. These dimensions may include, but are not limited to, the length, width, depth, and volume of the manufacturing bed. GEA computer device 210 compares the plurality of part dimensions with the plurality of manufacturing dimensions for the at least one part. Based on the comparison, GEA computer device 210 determines whether the manufacturing system 225 is able to manufacture the at least one part based on the comparison. For example, GEA computer device 210 determines whether or not the part will be able to fit into the bed of the manufacturing system 225. If the determination is that the manufacturing system 225 is able to manufacture the at least one part, GEA computer device 210 generates a three-dimensional (3D) build file 116 (shown in FIG. 1) for the manufacturing system 225 to manufacture the at least one part. In some embodiments, GEA computer device 210 transmits the 3D build file 116 to manufacturing system 225.

In some further embodiments, GEA computer device 210 detects a plurality of parts in the at least one image based on the one or more geometric shapes. GEA computer device 210 combines two or more combine two or more of the plurality of parts into a single part to manufacture by the manufacturing system 225 based on the plurality of part dimensions of the combined parts and the plurality of manufacturing dimensions. In these embodiments, GEA computer device 210 analyzes the size of the manufacturing area of manufacturing system 225 and determines how to combine multiple parts into a single part that may be manufactured by manufacturing system 225. For example, GEA computer device 210 may combine a pipe and the connectors that are used to connect the pipe to another part. In another example, GEA computer device 210 may combine two or more pipes into a single pipe to reduce the number of parts required.

In the example embodiment, GEA computer device 210 removes a plurality of symbolic markings from the at least one image. Engineering drawings generally contain markings and/or symbols, such as reference labels and leadings arrows. In the example embodiment, GEA computer device 210 removes these markings from the images prior to extracting the contours. Removal of these markings, improves the ability of GEA computer device 210 and contour extractor 110 to recognize the actual contours of parts and only retain the part representation in the image. In some embodiments, GEA computer device 210 stores a library or repository of symbolic marker images, such as in database 220. In these embodiments, GEA computer device 210 and marking mask 108 (shown in FIG. 1) use the stored images to recognize symbolic markings in the images to remove. In some further embodiments, GEA computer device 210 determines one or more previously unknown symbolic markings and stores those markings in database 220. In other embodiments, the library of symbolic markings is provided by the user.

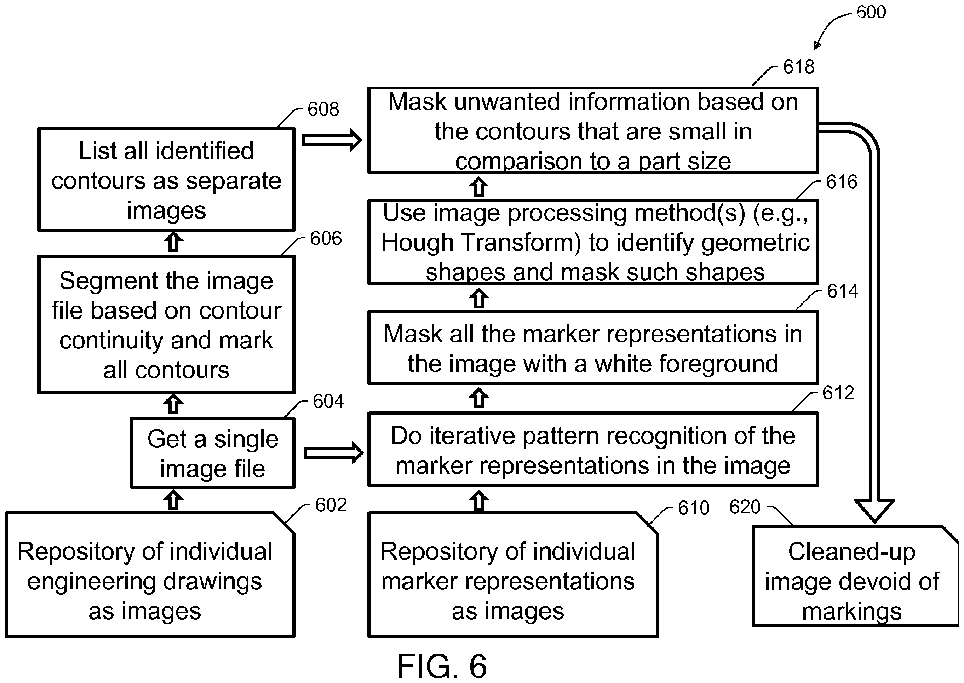

FIG. 6 is a flow chart of a process 600 for cleaning up images using system 200 (shown in FIG. 2). In the example embodiment, process 600 is performed by GEA computer device 210 (shown in FIG. 2).

In the example embodiment, GEA computer device 210 stores 602 a repository of individual engineering drawings as images, such as in database 220 (shown in FIG. 1). The engineering drawings may be from paper drawings, such as from maintenance and engineering manuals. GEA computer device 210 selects 604 a single image file 104 (shown in FIG. 1) from the repository of images. In the example embodiment, GEA computer device 210 performs two processes on image file 104.

In the first process, GEA computer device 210 segments 606 image file 104 based on the continuity of the contours and marks all of the contours. GEA computer device 210 lists 608 all the identified contours as separate images.

In the second process, GEA computer device 210 stores 610 a repository of individual marker representations as images, such as in database. GEA computer device 210 uses the image file 104 to do iterative pattern recognition 612 of the marker representations in the image. GEA computer device 210 masks 614 all the marker representations in the image with a white foreground. GEA computer device 210 performs 616 image processing on the image to identify the geometric shapes and also masks them with a white foreground. In the example embodiment, GEA computer device 210 uses a Hough Transform to identify and mask the geometric shapes. Ones skilled in the art understand that other image processing techniques may also be used to achieve this effect.

GEA computer device 210 combines the list of all identified contours as separate images (from 608) with the masked markings and geometric shapes (from 616) to mask 618 unwanted information based on the contours that are small in comparison to a part size. In the example embodiment, GEA computer device 210 masks the marker representations and the contours that are too small to generate 620 a cleaned-up image devoid of markings. In some embodiments, a user may adjust a setting to control the relative size difference threshold for GEA computer device 210 to determine which contours are too small.

For example, GEA computer device 210 selects 604 a file from the repository. GEA computer device 210 segments 606 the image file 104 and marks the contours in the image file 104. GEA computer device 210 then stores those contours as separate images (from 608). GEA computer device 210 performs 612 pattern recognition on the marker representations in the image and masks 614 those representations with a white foreground to hide them. GEA computer device 210 also hides 616 the other geometric shapes in the image. Using the images of the different contours, GEA computer device 210 masks 618 out the unwanted contours and markers. These are kept white (or the same color as the background) to hide them. The remaining contours make up the cleaned-up image 620. In the example embodiment, GEA computer device 210 stores the images of the remaining contours.

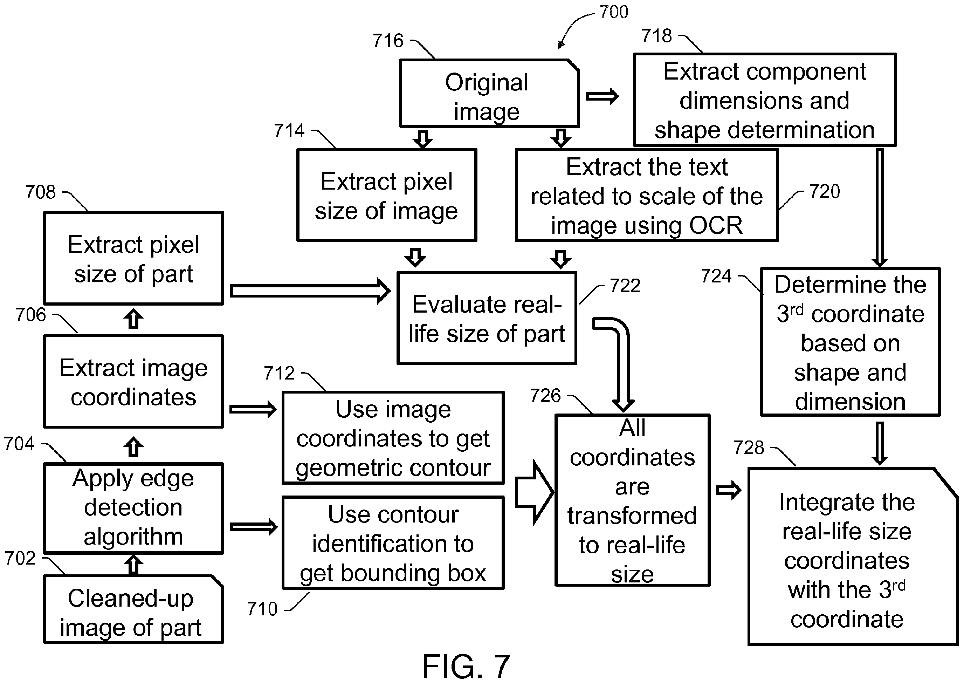

FIG. 7 is a flow chart of a process 700 for analyzing engineering drawings to extract three-dimensional (3D) part geometries using system 200 (shown in FIG. 2). In the example embodiment, process 600 is performed by GEA computer device 210 (shown in FIG. 2).

In the example embodiments, GEA computer device 210 receives 702 a cleaned-up image of a part, such as from step 620 of process 600 (both shown in FIG. 6). GEA computer device 210 applies 704 an edge detection algorithm to the cleaned-up image. GEA computer device 210 extracts 706 image coordinates from the cleaned-up image. GEA computer device 210 also extracts 708 the pixel size of each part in the cleaned-up image.

GEA computer device 210 analyzes the edge detected image to identify 710 contours in the image to determine the bounding box. The bounding box is the minimum or smallest bounding or enclosing box that an entire part or plurality of parts will fit into. GEA computer device 210 uses the extracted image coordinates to determine 712 the geographic contours of the parts in the image.

GEA computer device 210 uses the original image 716, that the cleaned-up image 702 is based on, to extract 714 the pixel size of the image in the image. GEA computer device 210 also extracts 720 text related to the scale of the image using optical character recognition (OCR). GEA computer device 210 combines the extracted pixel size of the part, the extracted pixel size of the image, and the extracted text related to the scale to determine 722 the real-life size of the part. Using the real-life size of the part, GEA computer device 210 transforms 726 the geometric contours and the bounding box into real-life size.

GEA computer device 210 extracts 718 component dimensions and shape determination from the original file 716. GEA computer device 210 determines the third coordinate (length, width, and/or height) 724 based on the shape and dimensions of the part in the image. The third coordinate represents the coordinate of the part that is not represented by the 2D image. GEA computer device 210 integrates 728 the real-life size coordinates with the 3^{rd} coordinates. In some embodiments, the integrated coordinates are used to generate a 3D image, a coordinate list of the part or parts in the image file 104, and/or a manufacturing build file 116 (shown in FIG. 1).

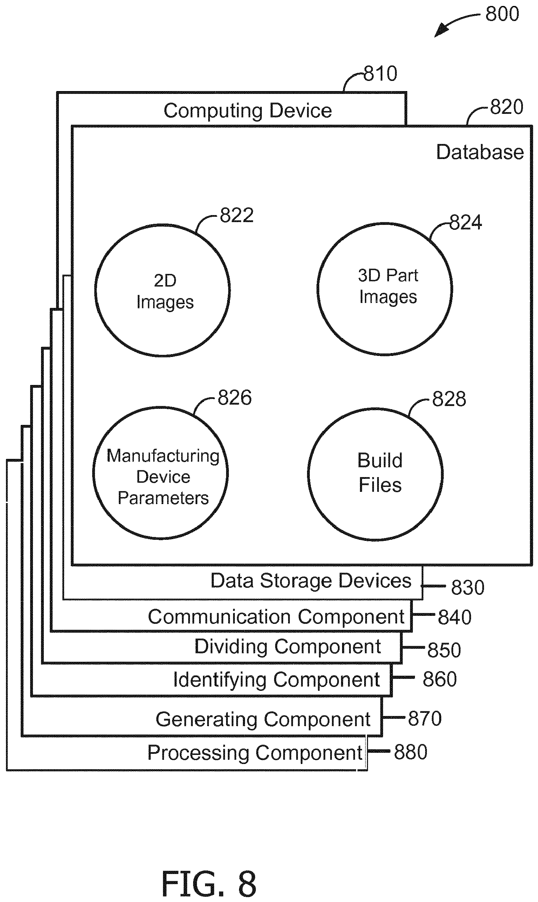

FIG. 8 is a diagram 800 of components of one or more example computing devices that may be used in system 200 shown in FIG. 2. In some embodiments, computing device 810 is similar to GEA computer device 210 (shown in FIG. 2). Database 820 may be coupled with several separate components within computing device 810, which perform specific tasks. In this embodiment, database 820 includes extracted 2D images 822, 3D part images 824, manufacturing system parameters 826, and build files 828 (which may be similar to build file 116 shown in FIG. 1). In some embodiments, database 820 is similar to database 220 (shown in FIG. 2).

Computing device 810 includes database 820, as well as data storage devices 830. Computing device 810 also includes a communication component 840 for receiving 505 at least one image (shown in FIG. 5). Computing device 810 also includes a dividing component 850 for dividing 510 at least one image into a plurality of segments (shown in FIG. 5). Computing device 810 further includes an identifying component 860 for identifying 515 one or more geometric shapes and identifying 520 the one or more parts (both shown in FIG. 5). Moreover computing device includes a generating component 870 for generating 525 a three-dimensional image (shown in FIG. 5). A processing component 880 assists with execution of computer-executable instructions associated with the system.

A processor or a processing element may be trained using supervised or unsupervised machine learning, and the machine learning program may employ a neural network, which may be a convolutional neural network, a deep learning neural network, or a combined learning module or program that learns in two or more fields or areas of interest. Machine learning may involve identifying and recognizing patterns in existing data in order to facilitate making predictions for subsequent data. Models may be created based upon example inputs in order to make valid and reliable predictions for novel inputs.

Additionally or alternatively, the machine learning programs may be trained by inputting sample data sets or certain data into the programs, such as image data, previously recognized markings, previous part images, and other data. The machine learning programs may utilize deep learning algorithms that may be primarily focused on pattern recognition, and may be trained after processing multiple examples. The machine learning programs may include Bayesian program learning (BPL), image or object recognition, optical character recognition, pixel recognition, and/or natural language processing - either individually or in combination. The machine learning programs may also include natural language processing, semantic analysis, automatic reasoning, and/or machine learning.

In supervised machine learning, a processing element may be provided with example inputs and their associated outputs, and may seek to discover a general rule that maps inputs to outputs, so that when subsequent novel inputs are provided the processing element may, based upon the discovered rule, accurately predict the correct output. In unsupervised machine learning, the processing element may be required to find its own structure in unlabeled example inputs. In one embodiment, machine learning techniques may be used to extract data about a part, one or more markings, image data, and/or other data.

Based upon these analyses, the processing element may learn how to identify characteristics and patterns that may then be applied to analyzing engineering drawings, image data, and/or other data. For example, the processing element may learn to identify a location or object based upon minimal information or despite a misclassification by a user. The processing element may also learn how to identify different types of objects based upon differences in the received image data.

The computer-implemented methods discussed herein may include additional, less, or alternate actions, including those discussed elsewhere herein. The methods may be implemented via one or more local or remote processors, transceivers, servers, and/or sensors (such as processors, transceivers, servers, and/or sensors mounted on vehicles or mobile devices, or associated with smart infrastructure or remote servers), and/or via computer-executable instructions stored on non-transitory computer-readable media or medium. Additionally, the computer systems discussed herein may include additional, less, or alternate functionality, including that discussed elsewhere herein. The computer systems discussed herein may include or be implemented via computer-executable instructions stored on non-transitory computer-readable media or medium.

As used herein, the term "non-transitory computer-readable media" is intended to be representative of any tangible computer-based device implemented in any method or technology for short-term and long-term storage of information, such as, computer-readable instructions, data structures, program modules and sub-modules, or other data in any device. Therefore, the methods described herein may be encoded as executable instructions embodied in a tangible, non-transitory, computer readable medium, including, without limitation, a storage device and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and nonvolatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As described above, the implementations described herein relate to systems and methods for extracting part geometry, and more specifically, to analyzing engineering drawings to extract part geometries for additive manufacturing. More specifically, a geometry extraction and analysis ("GEA") computer device cleans up and analyzes engineering drawings to extract three-dimensional (3D) representations of parts. The GEA computer device generates 3D printer build files based on the 3D representations of the parts.

The above-described methods and systems for part geometry extraction are cost-effective, secure, and highly reliable. The methods and systems include cleaning up markings from images, extracting the image of one or more parts from the images, generating a 3D representation of the part based on the cleaned-up images, determining the size of the parts based on information in the images, generating build files for manufacturing based on the 3D representations, and improving the speed and accuracy of performing the above steps. Furthermore, the above methods describe an alternative to manually generating build files. Instead, the systems and methods described herein describe a more cost-efficient and quicker method of going from engineering drawings to manufacturing. Accordingly, the methods and systems facilitate improving the use and efficiency of converting engineering drawings in a cost-effective and reliable manner.

The methods and system described herein may be implemented using computer programming or engineering techniques including computer software, firmware, hardware, or any combination or subset. As disclosed above, at least one technical problem with prior systems is that there is a need for systems for a cost-effective and reliable manner for converting engineering drawings. The system and methods described herein address that technical problem. The technical effect of the systems and processes described herein is achieved by performing at least one of the following steps: (a) receiving, by the processor, at least one image of at least one view of one or more parts, wherein the at least one image comprises a plurality of pixels; (b) dividing, by the processor, the at least one image into a plurality of segments based on one or more contours contained in the at least one image; (c) identifying, by the processor, one or more geometric shapes in the at least one image based on the plurality of segments; (d) identifying, by the processor, the one or more parts based on the one or more geometric shapes; (e) removing a plurality of symbolic markings from the at least one image; (f) determining a relative size of the one or more parts based on the plurality of pixels associated with the one or more geometric shapes; (g) determining at least one part dimension of a plurality of part dimensions of one of the one or more parts; (h) calculating a plurality of part dimensions associated with each of the one or more parts based on the determined at least one part dimension and the relative size of the one or more parts; and (i) generating, by the processor, a three-dimensional image of the one or more parts based on the one or more geometric shapes.

In some embodiments, the technical effect of the systems and processes described herein is achieved by performing at least one of the following steps: (a) receiving a plurality of manufacturing dimensions of a manufacturing system for manufacturing at least one part of the one or more parts; (b) comparing the plurality of part dimensions with the plurality of manufacturing dimensions for the at least one part; (d) determining whether the manufacturing system is able to manufacture the at least one part based on the comparison; (e) generating a three-dimensional build file for the manufacturing system to manufacture the at least one part if the determination is that the manufacturing system is able to manufacture the at least one part; (f) detecting a plurality of parts based on the one or more geometric shapes; (g) combining two or more of the plurality of parts into a single part to manufacture by the manufacturing system based on the plurality of part dimensions of the combined parts and the plurality of manufacturing dimensions.

The resulting technical effect is generating 3D images and build files for parts in engineering drawings without requiring expensive and time consuming redrawing.

Further, the disclosure comprises embodiments according to the following clauses:
Clause 1. A geometry extraction and analysis ("GEA") computer device comprising at least one processor in communication with at least one memory device, said GEA computer device configured to:
   receive at least one image of at least one view of one or more parts;
   divide the at least one image into a plurality of segments based on one or more contours contained in the at least one image;
   identify one or more geometric shapes in the at least one image based on the plurality of segments;
   identify the one or more parts based on the one or more geometric shapes; and
   generate a three-dimensional image of the one or more parts based on the one or more geometric shapes.
Clause 2. A GEA computer device in accordance with Clause 1, wherein the at least one image comprises a plurality of pixels, and wherein said GEA computer device is further configured to determine a relative size of the one or more parts based on the plurality of pixels associated with the one or more geometric shapes.
Clause 3. A GEA computer device in accordance with any preceding Clause, in particular Clause 2, wherein said GEA computer device is further configured to:
   determine at least one part dimension of a plurality of part dimensions of one of the one or more parts; and
   calculate a plurality of part dimensions associated with each of the one or more parts based on the determined at least one part dimension and the relative size of the one or more parts.
Clause 4. A GEA computer device in accordance with any preceding Clause, in particular Clause 3, wherein said GEA computer device is further configured to:
   receive a plurality of manufacturing dimensions of a manufacturing system for manufacturing at least one part of the one or more parts;
   compare the plurality of part dimensions with the plurality of manufacturing dimensions for the at least one part; and
   determine whether the manufacturing system is able to manufacture the at least one part based on the comparison.
Clause 5. A GEA computer device in accordance with any preceding Clause, in particular Clause 4, wherein said GEA computer device is further configured to generate a three-dimensional build file for the manufacturing system to manufacture the at least one part if the determination is that the manufacturing system is able to manufacture the at least one part.
Clause 6. A GEA computer device in accordance with any preceding Clause, in particular any one of Clauses 4 or 5, wherein said GEA computer device is further configured to:
   detect a plurality of parts based on the one or more geometric shapes; and
   combine two or more of the plurality of parts into a single part to manufacture by the manufacturing system based on the plurality of part dimensions of the combined parts and the plurality of manufacturing dimensions.
Clause 7. A GEA computer device in accordance with any one of Clauses 1-6, wherein said GEA computer device is further configured to remove a plurality of symbolic markings from the at least one image.
Clause 8. A GEA computer device in accordance with any one of Clauses 1-7, wherein the at least one image includes a plurality of parts, wherein the at least one image includes a plurality of views of a first part of the plurality of parts, and wherein said GEA computer device is further configured to:
   determine at least one part dimension of the first part based on the plurality of views of the first part; and
   calculate the plurality of part dimensions of a second part of the plurality of parts based on the determined at least one part dimension.
Clause 9. A GEA computer device in accordance with any preceding Clause, in particular Clause 8, wherein the plurality of views includes a first view including the first part, wherein the plurality of views includes a second view including the first part and the second part, and wherein said GEA computer device is further configured to determine the at least one part dimension of the first part from the first view.
Clause 10. A GEA computer device in accordance with any preceding Clause, in particular Clause 9, wherein the first view is a zoom-in view of the first part.
Clause 11. A method for extracting part geometry, said method implemented using a geometry extraction and analysis ("GEA") computer device, said GEA computer device including a processor in communication with a memory, said method comprising:
   receiving, by the processor, at least one image of at least one view of one or more parts;
   dividing, by the processor, the at least one image into a plurality of segments based on one or more contours contained in the at least one image;
   identifying, by the processor, one or more geometric shapes in the at least one image based on the plurality of segments;
   identifying, by the processor, the one or more parts based on the one or more geometric shapes; and
   generating, by the processor, a three-dimensional image of the one or more parts based on the one or more geometric shapes.
Clause 12. A method in accordance with Clause 11, wherein the at least one image comprises a plurality of pixels, and wherein said method further comprises:
   determining a relative size of the one or more parts based on the plurality of pixels associated with the one or more geometric shapes;
   determining at least one part dimension of a plurality of part dimensions of one of the one or more parts; and
   calculating a plurality of part dimensions associated with each of the one or more parts based on the determined at least one part dimension and the relative size of the one or more parts.
Clause 13. A method in accordance with any preceding Clause, in particular Clause 12 further comprising:
   receiving a plurality of manufacturing dimensions of a manufacturing system for manufacturing at least one part of the one or more parts;
   comparing the plurality of part dimensions with the plurality of manufacturing dimensions for the at least one part; and
   determining whether the manufacturing system is able to manufacture the at least one part based on the comparison.
Clause 14. A method in accordance with any preceding Clause, in particular Clause 13 further comprising generating a three-dimensional build file for the manufacturing system to manufacture the at least one part if the determination is that the manufacturing system is able to manufacture the at least one part.
Clause 15. A method in accordance with any preceding Clause, in particular any one of Clauses 13 or 14 further comprising:
   detecting a plurality of parts based on the one or more geometric shapes; and
   combining two or more of the plurality of parts into a single part to manufacture by the manufacturing system based on the plurality of part dimensions of the combined parts and the plurality of manufacturing dimensions.
Clause 16. A method in accordance with any one of Clauses 11-15 further comprising removing a plurality of symbolic markings from the at least one image.
Clause 17. At least one non-transitory computer-readable storage media having computer-executable instructions embodied thereon, wherein when executed by at least one processor, the computer-executable instructions cause the processor to:
   receive at least one image of at least one view of one or more parts;
   divide the at least one image into a plurality of segments based on one or more contours contained in the at least one image;
   identify one or more geometric shapes in the at least one image based on the plurality of segments;
   identify the one or more parts based on the one or more geometric shapes; and
   generate a three-dimensional image of the one or more parts based on the one or more geometric shapes.
Clause 18. The computer-readable storage media of Clause 17, wherein the at least one image comprises a plurality of pixels, and wherein the computer-executable instructions further cause the processor to:
   determine a relative size of the one or more parts based on the plurality of pixels associated with the one or more geometric shapes;
   determine at least one part dimension of a plurality of part dimensions of one of the one or more parts; and
   calculate a plurality of part dimensions associated with each of the one or more parts based on the determined at least one part dimension and the relative size of the one or more parts.
Clause 19. The computer-readable storage media of any preceding Clause, in particular Clause 18, wherein the at least one image comprises a plurality of pixels, and wherein the computer-executable instructions further cause the processor to:
   receive a plurality of manufacturing dimensions of a manufacturing system for manufacturing at least one part of the one or more parts;
   compare the plurality of part dimensions with the plurality of manufacturing dimensions for the at least one part;
   determine whether the manufacturing system is able to manufacture the at least one part based on the comparison; and
   generate a three-dimensional build file for the manufacturing system to manufacture the at least one part if the determination is that the manufacturing system is able to manufacture the at least one part.
Clause 20. The computer-readable storage media of any preceding Clause, in particular Clause 19, wherein the at least one image comprises a plurality of pixels, and wherein the computer-executable instructions further cause the processor to:
   detect a plurality of parts based on the one or more geometric shapes; and
   combine two or more of the plurality of parts into a single part to manufacture by the manufacturing system based on the plurality of part dimensions of the combined parts and the plurality of manufacturing dimensions.

This written description uses examples to disclose various implementations, including the best mode, and also to enable any person skilled in the art to practice the various implementations, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A geometry extraction and analysis ("GEA") computer device (210) comprising at least one processor (305, 405) in communication with at least one memory device (310, 410), said GEA computer device (210) configured to:
receive at least one image of at least one view of one or more parts;
divide the at least one image into a plurality of segments based on one or more contours contained in the at least one image;
identify one or more geometric shapes in the at least one image based on the plurality of segments;
identify the one or more parts based on the one or more geometric shapes; and
generate a three-dimensional image of the one or more parts based on the one or more geometric shapes.

2. A GEA computer device (210) in accordance with Claim 1, wherein the at least one image comprises a plurality of pixels, and wherein said GEA computer device (210) is further configured to determine a relative size of the one or more parts based on the plurality of pixels associated with the one or more geometric shapes.

3. A GEA computer device (210) in accordance with Claim 2, wherein said GEA computer device (210) is further configured to:
determine at least one part dimension of a plurality of part dimensions of one of the one or more parts; and
calculate a plurality of part dimensions associated with each of the one or more parts based on the determined at least one part dimension and the relative size of the one or more parts.

4. A GEA computer device (210) in accordance with Claim 3, wherein said GEA computer device (210) is further configured to:
receive a plurality of manufacturing dimensions of a manufacturing system (225) for manufacturing at least one part of the one or more parts;
compare the plurality of part dimensions with the plurality of manufacturing dimensions for the at least one part; and
determine whether the manufacturing system (225) is able to manufacture the at least one part based on the comparison.

5. A GEA computer device (210) in accordance with Claim 4, wherein said GEA computer device (210) is further configured to generate a three-dimensional build file (116) for the manufacturing system (225) to manufacture the at least one part if the determination is that the manufacturing system (225) is able to manufacture the at least one part.

6. A GEA computer device (210) in accordance with any one of Claims 4 or 5, wherein said GEA computer device (210) is further configured to:
detect a plurality of parts based on the one or more geometric shapes; and
combine two or more of the plurality of parts into a single part to manufacture by the manufacturing system (225) based on the plurality of part dimensions of the combined parts and the plurality of manufacturing dimensions.

7. A GEA computer device (210) in accordance with any one of Claims 1-6, wherein said GEA computer device (210) is further configured to remove a plurality of symbolic markings from the at least one image.

8. A GEA computer device (210) in accordance with any one of Claims 1-7, wherein the at least one image includes a plurality of parts, wherein the at least one image includes a plurality of views of a first part of the plurality of parts, and wherein said GEA computer device (210) is further configured to:
determine at least one part dimension of the first part based on the plurality of views of the first part; and
calculate the plurality of part dimensions of a second part of the plurality of parts based on the determined at least one part dimension.

9. A GEA computer device (210) in accordance with Claim 8, wherein the plurality of views includes a first view including the first part, wherein the plurality of views includes a second view including the first part and the second part, and wherein said GEA computer device (210) is further configured to determine the at least one part dimension of the first part from the first view.

10. A GEA computer device (210) in accordance with Claim 9, wherein the first view is a zoom-in view of the first part.

11. A method for extracting part geometry, said method implemented using a geometry extraction and analysis ("GEA") computer device (210), said GEA computer device (210) including a processor in communication with a memory, said method comprising:
receiving (505), by the processor, at least one image of at least one view of one or more parts;
dividing (510), by the processor, the at least one image into a plurality of segments based on one or more contours contained in the at least one image;
identifying (515), by the processor, one or more geometric shapes in the at least one image based on the plurality of segments;
identifying (520), by the processor, the one or more parts based on the one or more geometric shapes; and
generating (525), by the processor, a three-dimensional image of the one or more parts based on the one or more geometric shapes.

12. A method in accordance with Claim 11, wherein the at least one image comprises a plurality of pixels, and wherein said method further comprises:
determining a relative size of the one or more parts based on the plurality of pixels associated with the one or more geometric shapes;
determining at least one part dimension of a plurality of part dimensions of one of the one or more parts; and
calculating a plurality of part dimensions associated with each of the one or more parts based on the determined at least one part dimension and the relative size of the one or more parts.

13. A method in accordance with Claim 12 further comprising:
receiving a plurality of manufacturing dimensions of a manufacturing system (225) for manufacturing at least one part of the one or more parts;
comparing the plurality of part dimensions with the plurality of manufacturing dimensions for the at least one part; and
determining whether the manufacturing system (225) is able to manufacture the at least one part based on the comparison, optionally, further comprising generating a three-dimensional build file for the manufacturing system (225) to manufacture the at least one part if the determination is that the manufacturing system (225) is able to manufacture the at least one part.

14. A method in accordance with Claim 13 further comprising:
detecting a plurality of parts based on the one or more geometric shapes; and
combining two or more of the plurality of parts into a single part to manufacture by the manufacturing system (225) based on the plurality of part dimensions of the combined parts and the plurality of manufacturing dimensions.

15. A method in accordance with any one of Claims 11-14 further comprising removing a plurality of symbolic markings from the at least one image.
